## Europäisches Patentamt

## European Patent Office

## Office européen des brevets

(19)

(11) Veröffentlichungsnummer: **0 123 814**
**A1**

# EUROPÄISCHE PATENTANMELDUNG

(21) Anmeldenummer: **84101998.7**

(22) Anmeldetag: **25.02.84**

(51) Int. Cl.³: **H 02 H 9/00**

(30) Priorität: **09.03.83 DE 3308320**

(43) Veröffentlichungstag der Anmeldung: **07.11.84**
**Patentblatt 84/45**

(84) Benannte Vertragsstaaten: **DE FR GB**

(71) Anmelder: **International Standard Electric Corporation,
320 Park Avenue, New York New York 10022 (US)**

(84) Benannte Vertragsstaaten: **FR GB**

(71) Anmelder: **Standard Elektrik Lorenz Aktiengesellschaft,
Hellmuth-Hirth-Strasse 42, D-7000 Stuttgart 40 (DE)**

(84) Benannte Vertragsstaaten: **DE**

(72) Erfinder: **Sigloch, Rainer, Hölderlinstrasse 31,
D-7148 Remseck 2 (DE)**
Erfinder: **Purucker, Hermann, Hauptstrasse 2,
D-8524 Kleinsendelbach (DE)**

(74) Vertreter: **Graf, Georg Hugo, Dipl.-Ing. et al, c/o
Standard Elektrik Lorenz AG Patent- und Lizenzwesen
Postfach 300 929 Kurze Strasse 8,
D-7000 Stuttgart 30 (DE)**

(54) **Schaltungsanordnung zur Begrenzung des Einschaltstromes.**

(57) Die Schaltungsanordnung zur Begrenzung des Einschaltstromes weist in der einen Versorgungsleitung zur Stromversorgung (Stv) einen Widerstand (R1) und eine Diode (D1) als Verpolungsschutz auf. Der Widerstand (R1) und die Diode (D1) werden nach dem Abklingen des Einschaltstromes durch einen Arbeitskontakt (a) eines Relais (A) überbrückt. Das Relais (A) kann gleichzeitig durch öffnen eines Ruhekontaktes (a1) einen Widerstand (R6'') in seinen Stromweg schalten, um seinen Stromverbrauch zu senken.

EP 0 123 814 A1

R.Sigloch-H.Purucker 2-1

### Schaltungsanordnung zur Begrenzung des Einschaltstromes

Die Erfindung bezieht sich auf eine Schaltungsanordnung gemäß dem Oberbegriff des Anspruches 1.

Aus der DE-AS 22 47 816 ist eine derartige Schaltungsanordnung bekannt, die zum Überbrücken des Widerstandes in der Versorgungsleitung einen Thyristor verwendet. Der Thyristor wird von einem Transistor gesteuert, der seinerseits vom Spannungswert am Widerstand gesteuert wird. Es kann hierbei vorkommen, daß die spannungsabhängige Zündung des Thyristors ausbleibt. Dann muß ein weiterer Zündimpuls erzeugt werden, was den Aufwand für die Schaltung erhöht.

Der Erfindung liegt die Aufgabe zugrunde, eine Schaltungsanordnung der eingangs genannten Art anzugeben, die eine geringe Verlustleistung und einen Verpolungsschutz aufweist.

Die Lösung erfolgt mit den im Anspruch 1 angegebenen Mitteln. Ausgestaltungen der Erfindung können den Unteransprüchen entnommen werden.

ZT/P1-Wr/R

04.03.1983

R.Sigloch 2-1

Durch die Überbrückung des Verpolungsschutzes nach dem
Begrenzen des Einschaltstromes wird durch ihn während
des normalen Betriebes keine Verlustleistung erzeugt.

Die Verminderung des Haltestromes des Relais nach dem Begrenzen vermindert ebenso die Verlustleistung der Schaltungsanordnung.

Die Erfindung wird nun anhand von Zeichnungen eines Ausführungsbeispieles näher erläutert.
Es zeigen:

Fig. 1     einen schematischen Stromlaufplan einer Schal-
           tungsanordnung zur Begrenzung des Einschaltstromes
           von Stromversorgungen;

Fig. 2     die Schaltungsanordnung gemäß Fig. 1 mit einer
           Ergänzung und

Fig. 3     eine in ihrer Steuerschaltung anders aufgebaute
           Schaltungsanordnung gemäß Fig. 1.

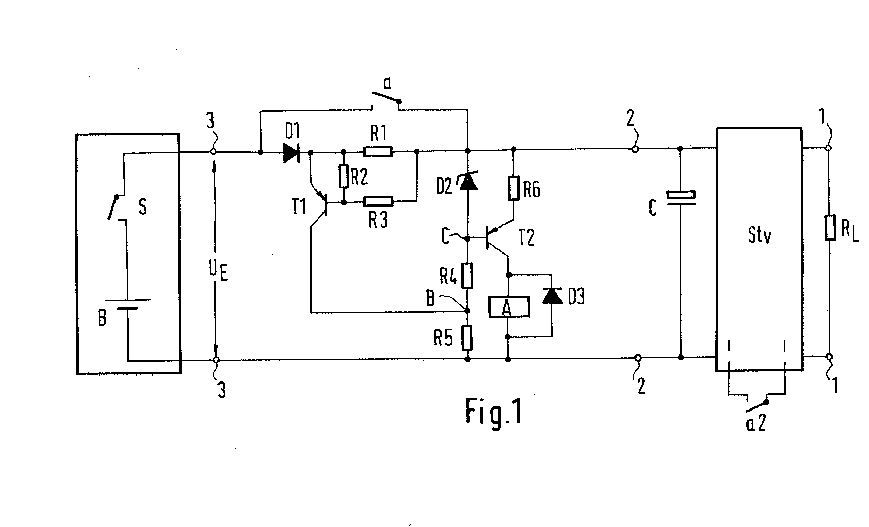

Die in Fig. 1 dargestellte Schaltungsanordnung zur Begrenzung des Einschaltstromes der nachgeschalteten Stromversorgung Stv ist über einen Schalter S an eine Batterie B
angeschlossen. Die Batterie B stellt eine Eingangsgleichspannung $U_E$ zur Verfügung. An den Ausgangsanschlüssen 1
der Stromversorgung Stv ist eine Last $R_L$ vorhanden und
über ihre Eingangsanschlüsse 2 ist ein Elektrolytkondensator C geschaltet, der Teil eines Siebgliedes der Stromversorgung ist. Dieser und andere Kondensatoren in der
Stromversorgung Stv nehmen beim Einschalten der Eingangsgleichspannung $U_E$ einen sehr großen Ladestrom auf, der den

R.Sigloch 2-1

Einschaltstrom der Stromversorgung darstellt.

In der einen Versorgungsleitung zwischen einem Ausgangsanschluß 3 der Batterie B und dem Eingangsanschluß 2 der
Stromversorgung Stv ist in Reihe eine Diode D1 als Verpolungsschutz und ein Widerstand R1 zur Begrenzung des
Einschaltstromes vorhanden. Die andere Versorgungsleitung
zwischen der Batterie B und der Stromversorgung Stv ist
eine galvanische Verbindung. Parallel zur Diode D1 und
zum Widerstand R1 liegt ein Arbeitskontakt a eines Relais A.
Bei einer Betätigung des Relais A schließt der Arbeitskontakt a und überbrückt die Diode D1 und den Widerstand R1,
wodurch nun eine direkte Verbindung zwischen der Batterie B
und der Stromversorgung Stv hergestellt ist.

Die Steuerschaltung, die das Relais A betätigt, besteht
aus einem Fühlerkreis zum Erkennen eines bestimmten Spannungswertes am Widerstand R1.

Der Fühlerkreis ist folgendermaßen aufgebaut:
An den Verbindungspunkt der Diode D1 mit dem Widerstand
R1 ist der Emitter eines PNP-Transistors T1 angeschlossen,
dessen Basis über je einen Widerstand R2 bzw. R3 mit den
Anschlüssen des Widerstandes R1 verbunden ist. Der Kollektor des Transistors T1 ist an einen Punkt B einer Reihenschaltung aus einer Zenerdiode D2 und zwei Widerständen
R4 und R5 angeschlossen. Diese Reihenschaltung ist nach
dem Widerstand R1 zwischen die Versorgungsleitungen geschaltet.

Die Reihenschaltung gehört zum Relaiskreis und ein Punkt C
zwischen der Zenerdiode D2 und dem Widerstand R4 ist mit

R.Sigloch 2-1

der Basis eines PNP-Transistors T2 verbunden. Der Emitter des Transistors T2 ist über einen Widerstand R6 an die eine Versorgungsleitung nach dem Widerstand R1 angeschlossen. An den Kollektor des Transistors T2 ist das Relais A angeschlossen, dessen anderer Anschluß mit der anderen Versorgungsleitung in Verbindung steht. Parallel zum Relais A ist eine Schutzdiode D3 vorhanden.

Beim Anlegen der Eingangsgleichspannung $U_E$ will ein großer Einschaltstrom fließen, der aber durch den Widerstand R1 begrenzt wird. Vorausgesetzt ist hierbei, daß die Eingangsgleichspannung mit der richtigen, von der Diode D1 bestimmten Polarität angelegt wird. Der am Widerstand R1 auftretende hohe Spannungswert steuert den Transistor T1 derart, daß dieser den Transistor T2 gesperrt hält. Dadurch fließt durch das Relais A kein Strom und der Arbeitskontakt a bleibt geöffnet. Klingt der Einschaltstrom ab, so verringert sich der Spannungswert am Widerstand R1 entsprechend und nun steuert der Transistor T1 den Transistor T2 leitend. Der jetzt durch das Relais A fließende Strom läßt es anziehen und dadurch überbrückt der Arbeitskontakt a die Diode D1 und den Widerstand R1, so daß die Stromversorgung ohne Begrenzung ihres Eingangsstromes ist.

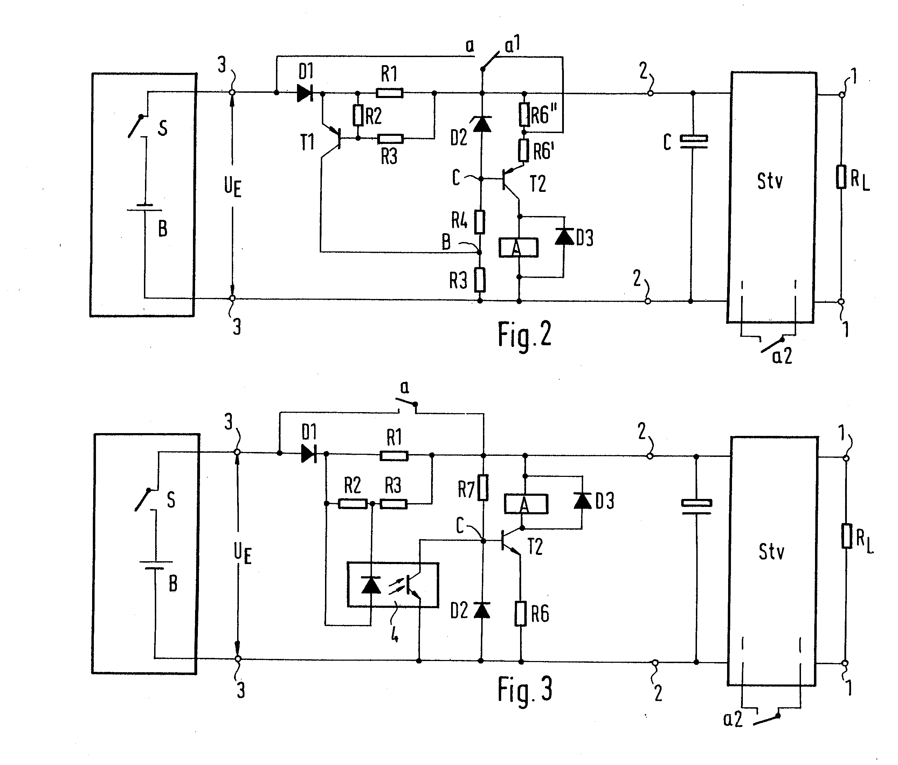

Die in Fig. 2 dargestellte Schaltungsanordnung stimmt bis auf eine Ergänzung mit der in Fig. 1 dargestellten überein. Daher sind gleiche Bauteile auch mit den gleichen Bezugszeichen versehen. Der Widerstand R6 besteht bei dieser Ausführung der Schaltungsanordnung aus zwei Widerständen R6' und R6''. Der Widerstand R6'' ist durch einen Ruhekontakt a1 des Relais A kurzgeschlossen und daher nicht wirksam. Wird, wie schon beschrieben, der Transistor T2

R.Sigloch 2-1

leitend, so kann durch das Relais A ein genügend großer
Anzugsstrom fließen. Danach benötigt das Relais A nur
einen geringeren Haltestrom. Wenn das Relais A angezogen
hat ist der Ruhekontakt a1 geöffnet. Jetzt ist der Widerstand R6" in den Stromweg des Relais A eingeschaltet und
setzt dessen Strom auf den Haltestrom herab. Der Arbeitskontakt a und der Ruhekontakt a1 können zu einem gemeinsamen Umschaltkontakt zusammengefaßt sein.

Die in Fig. 3 dargestellte Schaltungsanordnung weist eine
etwas geänderte Steuerschaltung gegenüber der Schaltungsanordnung gemäß Fig. 1 auf. Auch hier werden für gleiche
Bauteile gleiche Bezugszeichen verwendet.

Parallel zum Widerstand R2 ist in dieser Steuerschaltung
die Sendeseite eines Optokopplers 4 angeordnet, dessen
Empfangsseite mit dem Punkt C der Reihenschaltung aus der
Zenerdiode D2 und hier nur einem Widerstand R7 verbunden
ist. Der Transistor T2 ist ein NPN-Transistor und deswegen
steht sein Kollektor über das Relais A mit der einen Versorgungsleitung und sein Emitter über den Widerstand R6
mit der anderen Versorgungsleitung in Verbindung.

Beim Einschalten der Eingangsgleichspannung $U_E$ fließt über
die über den Widerstand R3 parallel zum Widerstand R1 angeordnete Leuchtdiode auf der Sendeseite des Optokopplers 4
ein genügend großer Strom, so daß sie Licht abgibt. Dieses
Licht trifft auf der Empfangsseite des Optokopplers 4 auf
die Basis eines Transistors, der dadurch leitet. Hierdurch
wird der Transistor T2 gesperrt und das Relais A behält
seinen gezeigten Zustand. Verringert sich der Einschalt-

- 8 -
- 6 -

R.Sigloch 2-1

strom und damit der Spannungswert am Widerstand R1 so fließt durch die Leuchtdiode kein genügender Strom mehr und sie gibt kein Licht mehr ab. Dadurch sperrt der Transistor des Optokopplers 4 und der Transistor T2 wird leitend gesteuert. Der jetzt durch das Relais A fließende Strom läßt es anziehen und der Arbeitskontakt a schließt.

Auch in dieser Schaltungsanordnung kann der Widerstand R6 aufgeteilt sein und mit Hilfe eines Ruhekontaktes des Relais A eine Begrenzung des Stromes durch das Relais A auf den Haltestrom vorgenommen werden, wie es schon zur Fig. 2 beschrieben wurde.

Wenn an die Last $R_L$ erst dann die Ausgangsgleichspannung der Stromversorgung Stv angelegt werden soll, wenn die Begrenzung ihres Eingangsstromes aufgehoben ist, so kann das Relais A mit einem weiteren Arbeitskontakt a2 versehen werden, der die Stromversorgung aktiviert. Dieser weitere Arbeitskontakt a2 ist in den Fig. 1 bis 3 an die Stromversorgung angeschlossen, ohne darzustellen wie er im Einzelnen in ihr wirkt. Hierdurch wird auch erreicht, daß der vom Arbeitskontakt a zu schaltende Strom äußerst klein gehalten wird.

R.Sigloch-H.Purucker 2-1

Patentansprüche

1. Schaltungsanordnung zur Begrenzung des Einschaltstromes von Stromversorgungen mit einem Widerstand in der einen Versorgungsleitung, der bei Erreichen eines bestimmten Spannungswertes an ihm von einem von einer Steuerschaltung betätigten Schaltglied überbrückt wird, d a d u r c h g e k e n n z e i c h n e t, daß in Reihe zum Widerstand (R1) eine Diode (D1) als Verpolungsschutz angeordnet ist und daß die Steuerschaltung bei Erreichen des bestimmten Spannungswertes ein Relais (A) einschaltet, dessen Arbeitskontakt (a) den Widerstand (R1) und die Diode (D1) überbrückt.

2. Schaltungsanordnung nach Anspruch 1, dadurch gekennzeichnet, daß das Relais (A) zusätzlich in seinen Stromkreis durch Öffnen eines Ruhekontaktes (a1) einen Widerstand (R6") einschaltet.

3. Schaltungsanordnung nach Anspruch 2, dadurch gekennzeichnet, daß der Arbeits- und der Ruhekontakt zu einem Umschaltkontakt zusammengefaßt sind.

4. Schaltungsanordnung nach Anspruch 1, dadurch gekennzeichnet, daß die Steuerschaltung einen Optokoppler aufweist, dessen Sendeseite vom Spannungswert am Widerstand

R.Sigloch 2-1

(R1) gesteuert wird und dessen Empfangsseite über einen
Transistor das Relais (A) steuert.

5. Schaltungsanordnung nach einem der vorhergehenden Ansprüche, dadurch gekennzeichnet, daß das Relais (A) einen
weiteren Arbeitskontakt $(a_2)$ aufweist, mit dem die Stromversorgung (Stv) aktiviert wird.

Fig.1

Fig. 2

Fig. 3

Europäisches
Patentamt

**EUROPÄISCHER RECHERCHENBERICHT**

0123814
Nummer der Anmeldung

EP 84 10 1998

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 743 622 (SIEMENS AG) <br> * Seite 3, Absätze 2, 3; Figur 3 * | 1 | H 02 H 9/00 |
| | --- | | |
| A | DE-A-3 122 835 (SIEMENS AG) <br> * Figur 4 * | 4 | |
| | --- | | |
| A | US-A-3 281 816 (E.B. RAYMOND) <br><br> * Figur 1 * | | |
| | --- | | |
| D,A | DE-B-2 247 816 (SIEMENS AG) <br><br> * Figur * | | |
| | ----- | | |

**RECHERCHIERTE SACHGEBIETE (Int. Cl. ³)**

H 02 H 9/00
H 02 H 9/02
H 02 H 11/00

Der vorliegende Recherchenbericht wurde für alle Patentansprüche erstellt.

| Recherchenort <br> BERLIN | Abschlußdatum der Recherche <br> 06-06-1984 | Prüfer <br> LEMMERICH J |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82